Europäisches Patentamt

European Patent Office

Office européen des brevets

(19)

(11) Publication number: 0 337 788
A2

# EUROPEAN PATENT APPLICATION

(12)

(21) Application number: 89303691.3

(22) Date of filing: 13.04.89

(51) Int. Cl.⁴: **B 60 T 11/30**
B 60 T 11/16

(30) Priority: 14.04.88 GB 8808792

(43) Date of publication of application:
18.10.89 Bulletin 89/42

(84) Designated Contracting States: DE ES FR GB IT

(71) Applicant: LUCAS INDUSTRIES public limited company
Great King Street
Birmingham, B19 2XF West Midlands (GB)

(72) Inventor: Campbell, Roy
The Corner House 1 Marlbrook Lane
Bromsgrove Worcestershire B60 1HP (GB)

Price, Anthony George
14 Meadow Lane
Croesycieliog Gwent Wales NP44 2EY (GB)

Taylor, Michael Anthony
46 Main Road
Gilwern Gwent Wales NP7 0AS (GB)

Green, Andrew Peter
The Chestnuts Glebe Farm Tur Weston
Nr. Brackley Northants, NN13 3JE (GB)

(74) Representative: Simpson, Ronald Duncan Innes et al
A.A.Thornton & Co. Northumberland House 303-306 High Holborn
London WCIV 7LE (GB)

(54) Masters cylinders.

(57) The cylinder bore of an hydraulic master cylinder is fitted with an insert (40) which divides the bore into a main pressure chamber (42) and an auxiliary chamber (44) adjacent an end wall of the cylinder. The auxiliary chamber leads to an outlet port (12) positioned at the bottom of the cylinder bore The insert and/or the bore define between them a longitudinal duct (54;80) located in the uppermost region of the bore so that at least some pressurized fluid flows through the duct to entrain any air bubbles present and carry air through the auxiliary chamber (44) to the outlet port (12).

EP 0 337 788 A2

Description

## Master Cylinders

This invention is concerned with improvements in and modifications to hydraulic cylinders, in particular, but not necessarily exclusively, master cylinders for vehicle braking systems.

British Patent Specification GB-A-2074271 discloses an hydraulic master cylinder comprising a body defining a cylinder bore and an outlet port connected to a lower region of the bore, and an insert stationarily inserted in the bore, the said insert defining, with the bore, a passage for leading fluid from the upper region of the cylinder to the outlet.

This arrangement is designed to facilitate bleeding of the master cylinder of air, which naturally tends to accumulate in the upper region of the bore. The insert of the above mentioned patent specification is formed as an annulus of outwardly open channel-section axially aligned with the outlet port. This construction has not proved to be entirely satisfactory due to the extended length and relatively narrow cross-section of the through flow area of the circumferential passage.

The present invention aims at the provision of an improved form of insert which reduces these disadvantages.

The invention is primarily characterised in that the insert is positioned to form a division between a main pressure chamber and an auxiliary chamber of relatively small volume which communicates with the outlet port, and that the said passage forms a longitudinal duct in the upper region of the bore interconnecting the two chambers.

With a master cylinder of this construction, any air present in the upper region of the pressure chamber is forced through the duct of the insert with the hydraulic fluid when the master cylinder is operated. Furthermore, the bubbles of air become entrained in the liquid flow and pass through the auxiliary chamber and out of the outlet port. Consequently, bleeding operations present no difficulties yet narrow passages for conducting fluid to outlet port can be avoided. The pressure chamber and the auxiliary chamber are simultaneously and efficiently bled.

Such an insert may be employed with particular advantage in a master cylinder of the kind comprising an axial reservoir port controlled by a valve carried on a spindle coupled to a piston of the master cylinder. In such a case the insert can serve as a guide for the valve spindle thereby obviating a separate valve guide member.

A better comprehension of the invention will be gained from the following description of some exemplary embodiments, reference being made to the accompanying drawings, in which:-

Figure 1 is a side view, shown partly in cross section, of a master cylinder in accordance with the invention.

Figure 2 is an axial, vertical cross-section of the front end portion of the master cylinder;

Figure 3 is a transverse section through the master cylinder of Figure 1, taken along the axis of the outlet port;

Figure 4 is a horizontal axial cross-section through the master cylinder of Figure 1, with the sleeve removed;

Figure 5 is a front elevation of the master cylinder shown in Figure 1;

Figure 6 is a view similar to Figure 4 and illustrating a modified construction;

Figures 7 and 8 correspond to Figures 2 and 3, respectively and show a second modified construction;

Figure 9 is a view corresponding to Figure 2 of a further embodiment of the invention;

Figure 10 is a perspective view of the insert shown in Figure 9;

Figure 11 is a view corresponding to Figure 9, illustrating another modification;

Figure 12, 13 and 14 are side views, partly in cross section, a front view and a view from beneath showing a master cylinder with a modified form of sleeve;

Figure 15, 16 and 17 are views corresponding with Figures 12 to 13 showing a further modified form of sleeve; and

Figures 18, 19 and 20 also correspond with Figures 12 to 14 showing yet another modified form of sleeve.

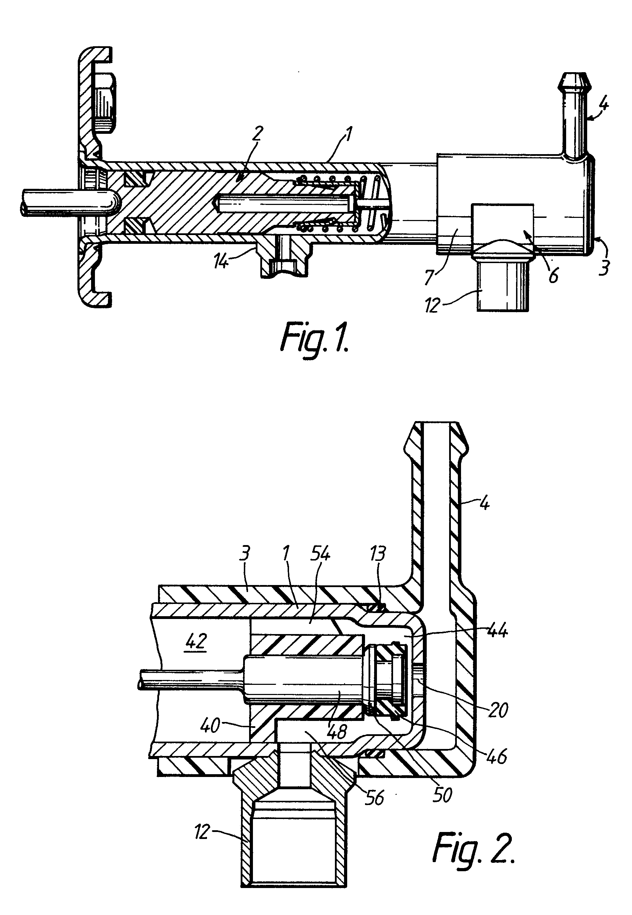

The master cylinder shown in Figures 1 to 5 comprises a substantially cylindrical tubular body 1 formed from steel tube and housing in known manner a piston assembly 2. At its forward end, the tube carries a moulded plastics sleeve member 3 which provides a connection between a reservoir (not shown) and the interior of the master cylinder. The sleeve is illustrated as having a connector spigot 4 but alternatively the upper portion of the sleeve member could be moulded integrally with a reservoir tank.

The forward end of the sleeve member is formed as a cylindrical cap, and in an intermediate portion, the sleeve is transversely slotted at 6 over its lower half. At its rear end, the sleeve member is formed with an arcuate clip 7 which is connected to the upper half of the sleeve by an integral hinge 8. Its free end is formed with a spring hook 9 engageable with a lug 11 projecting radially from the free edge of the upper portion of the sleeve.

Near its forward end, the body 1 has welded to it a radial outlet port 12 which, as shown, is in registry with the slotted lower portion of the sleeve member. the cylinder may also have a compensating port 14.

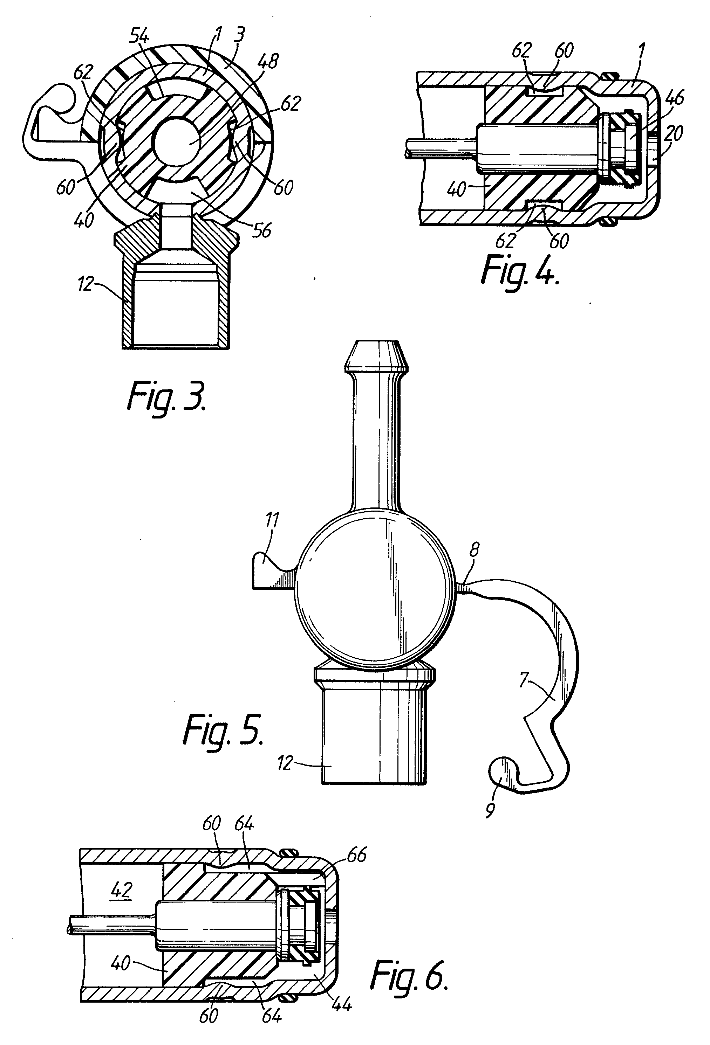

With clip 7 in its open position, shown in Figure 5, the sleeve member is slipped axially over the forward end of the body 1, with an O-ring seal 13 interposed as shown in Figure 2. When the sleeve is fully home, it abuts the port 12. The clip 7 is then swung around underneath the body 1 and its spring hook 9 engaged with the lug 11. The sleeve member is now fully secured, being locked against axial movement by its engagement with the outlet port 12. The sleeve can, however, be removed from the body 1 if necessary by releasing clip 7.

Turning now to the internal details of the master cylinder, and as seen in Figure 2,3 and 4, a unitary moulded plastics insert 40 is position in the bore of the body and separates the main pressure chamber 42 from an auxiliary or valve chamber 44 of relatively small volume confined between the insert and the end wall of the body. Located in the camber 44 is a valve 46 for closing the reservoir port 20 when the master cylinder is operated, the valve being carried on the end of a spindle 48 which extends slidably through an axial bore formed in the insert 40, and the rear end of which is coupled to the master cylinder piston (not shown) for holding the valve 46 open in an unactuated condition of the master cylinder. Thus the insert 40 serves as a guide for the spindle and supports it radially. In addition, it acts as a stationary reaction member for a spring 50 of the conical washer type, which is arranged to press the valve 46 yieldingly against the end wall of the body 1, and thereby close the port 20, when the piston is displaced to pressurise the fluid in chamber 42 upon actuation of the master cylinder.

A longitudinal groove 54 extends the full length of the insert 40 and with the uppermost portion of the body 1 defines an axial longitudinal duct connecting the two chambers 42,44. A further groove 56 is positioned diametrically opposite the groove 54 and extending over only part of the length of the insert defines with the body an outlet passage which connects the chamber 44 with the outlet port 12. Thus, the insert 40 defines a flow path which runs from the pressure chamber 42, along the duct 54, down through the chamber 44, along the passage path when the master cylinder is operated to pressurise the fluid in chamber 42, the reservoir port 20 being closed by the valve as explained above. Because the duct 54 is in the upper region of the bore any air within the master cylinder will flow with the liquid through this duct and as a consequence it becomes entrained with the liquid flow and continues to flow with the liquid to the outlet port 12 via the chamber 44 and the passage 56. Therefore, bleeding operations during which air and any other gas within the master cylinder is removed, are easy to perform in spite of the outlet port being in a lower part of the body.

The insert 40 is held both axially and rotationally fixed in the body by the latter being locally deformed, e.g. by staking, at diametrically opposed locations to form inner pips 60 which engage in recesses 62 provided in the insert. While this technique ensures a firm anchorage of the insert 40 it means that the insert, and hence valve 46, cannot be removed, e.g. for servicing.

The modified insert of Figure 6 is removable from the body. In this case, the pips 60 on the body cooperate with longitudinal grooves 64 in the surface of the insert, to prevent any rotation of the insert within the body. The axial location is determined by one or more forwardly projecting legs 66 integral with the insert and arranged to abut with their free ends against the body end wall. The insert is retained in this axial position by the piston return spring (not shown) which acts on the end of the insert facing the chamber 42.

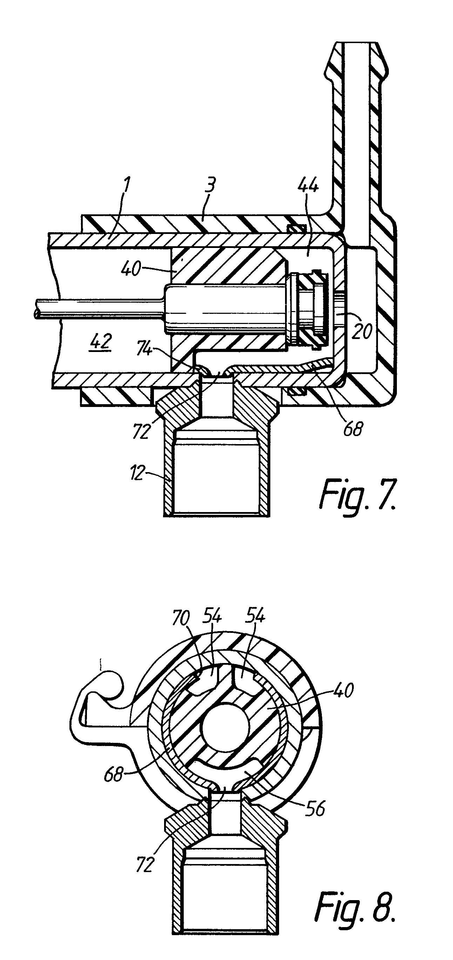

Another method of maintaining the insert 40 in position is depicted in Figure 7 and 8 and involves the use of a metal, e.g. steel, spacer 68 formed as a cylindrical sleeve with an axial slot 70. The spacer is inserted in the body with the forward end in abutment with the end wall of the body and the slot 70 at the top end of the body. A hole 72 is then punched through the sleeve, from inside of the body, in alignment with the outlet port, the lip or burr left around the hole projecting into the port and causing the spacer to be fixed both axially and rotationally in the body. The insert 40 is provided with a peripheral shoulder 74 which abuts against the rear end of the spacer 68 when the insert is introduced, this abutment being maintained by the piston return spring.

The inserts employed in the embodiments of Figures 6 to 8 facilitate bleeding of the master cylinder exactly as described for the master cylinder of Figures 1 to 5. It will be noted that the flow passage linking the pressure chamber 42 to the outlet 12 is not significantly restricted in its through flow area. The insert of Figure 6 to 7 is shown to have two grooves 54 whereby twin parallel ducts are provided near the top of the bore in the body.

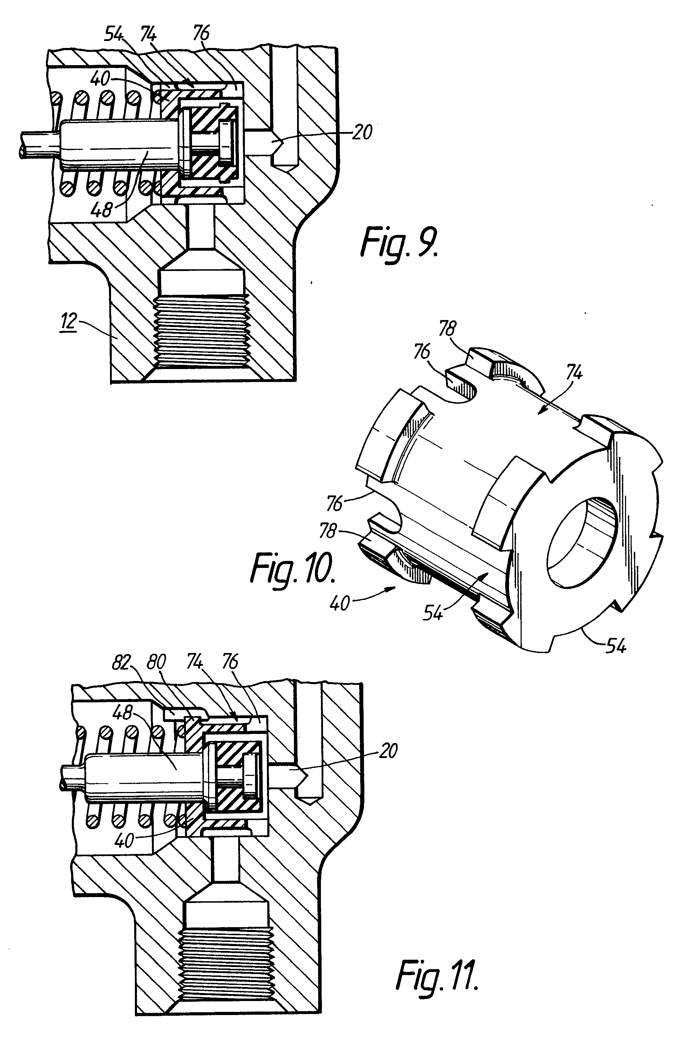

A further modified constructions is shown in Figures 9 and 10, in which the insert 40 has a plurality of longitudinal ducts 54 leading to an intermediate portion of reduced diameter forming a circumferential recess 74, so that air and fluid passage through the ducts 54 can pass around the recess 74 to reach the outlet port. The insert, like that of Figure 6, bears directly against the end wall of the cylinder body and its end portion is slotted at 76 to provide additional flow passages from the recess 74 to the chamber 44. In this end region, the insert is of full diameter to provide additional bearing engagement with the cylinder bore, but axially ducted at 78 to ensure access to the slots 76.

In the further modified construction of Figure 11 the insert 40 is of essentially the same form as that for Figure 10, except that the ducts 54 are omitted, and a continous collar 80 is formed at that end of the insert. The collar fits closely within the cylinder bore, which is formed in its uppermost region with an axial recess 82 traversing the axial length of the collar 80 to constitute a longitudinal flow chart performing the function of the flow ducts 54 of the previously described embodiments.

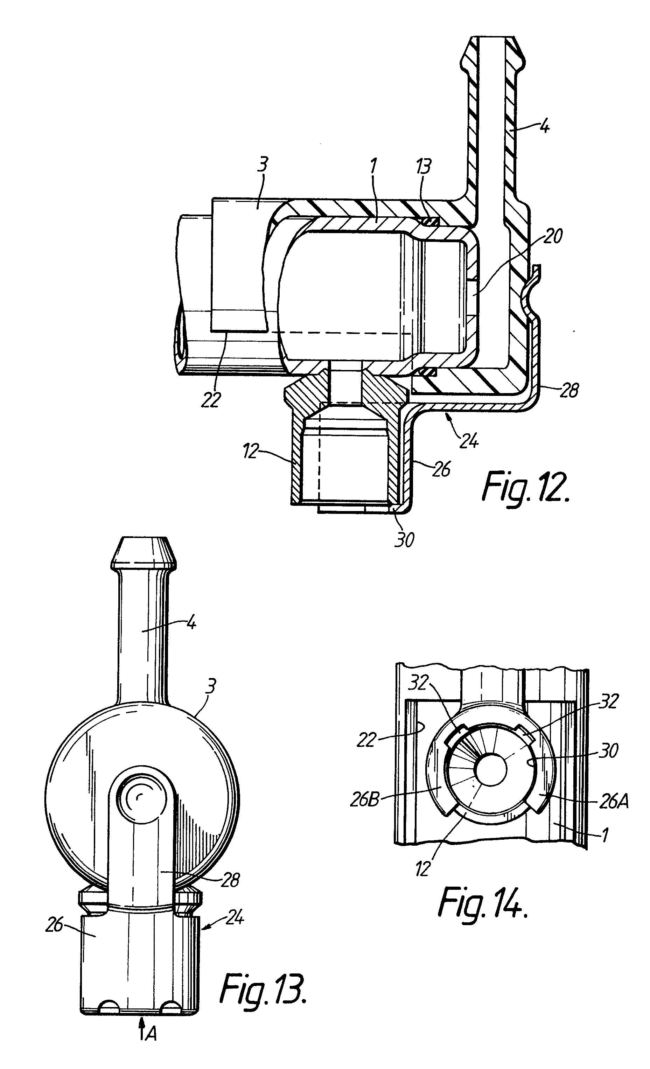

The master cylinders shown in Figures 12 to 14; 15 to 16; and 18 to 20, differ from those described above only with regard to the form of the moulded sleeve member 3, which corresponds in function to that shown in Figures 1 to 5.

In the embodiment of Figures 12 to 14, a longitudinally extending slot 22 is provided in the sleeve 3 to accommodate the outlet 12. If required, and as shown, the slot 22 can be of greater width than the outlet to enable some rotational adjustment of the sleeve 3 for changing the direction of projection of the spigot 4.

The sleeve is secured on the body by a separate retainer clip 24 with may be made of plastics or metal, such as steel. The clip has a first portion 26 which embraces and grips tightly the outlet 12. This portion is part-cylindrical and defines two opposed arcuate arms 26A, 26B which hold the outlet between them. The arms have free ends which are spaced apart to facilitate a snap action engagement with the outlet 12 by pushing the clip onto the outlet in the direction parallel to the axis of the body 1. Extending from the clip portion 26 is an L-shaped arm 28 the free end of which is adapted to bear resiliently against the central area of the sleeve end cap, thereby pressing the sleeve 3 onto the body 1 and preventing any relative axial displacement between them. The portion 26 of the clip is shown to have a flange or lip 30 arranged to lie against the end face of the outlet 12 and to be clamped by a coupling screwed into the outlet to secure the clip even tighter to the outlet. The lip 30 is interrupted by notches 32 so as not to impair the resilience of the arms 26A, 26B. It is also possible to attach the clip 24 by positioning the portion 26 over the outlet in the axial direction of the latter the arm 28 being flexed so that it clears and slides over the end surface of the sleeve 12.

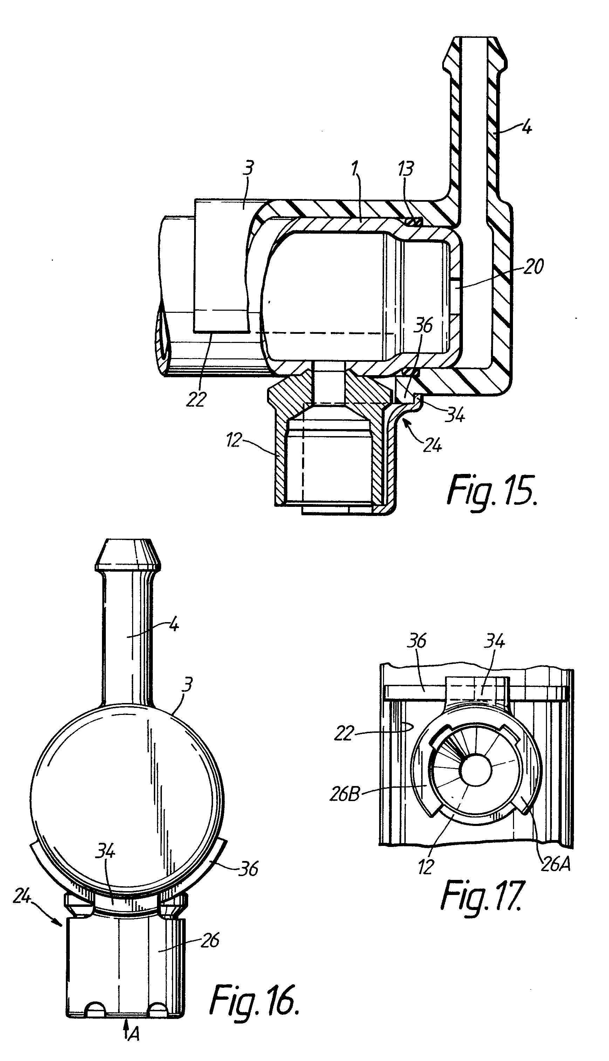

The master cylinder shown in Figures 15 17 is essentially the same as that of Figures 12 to 14, except that in place of the L-shaped arm 28 the retainer clip has a tongue 34 with an up-turned end defining a stop arranged to abut against the shoulder 36 formed on the sleeve 3. The shoulder extends peripherally around the sleeve a distance sufficient to maintain the stop in abutment therewith throughout the angular adjustment of the sleeve permitted by the slot 22. In all other respects the master cylinder is constructed and assembled as described above with reference to Figures 12 to 14.

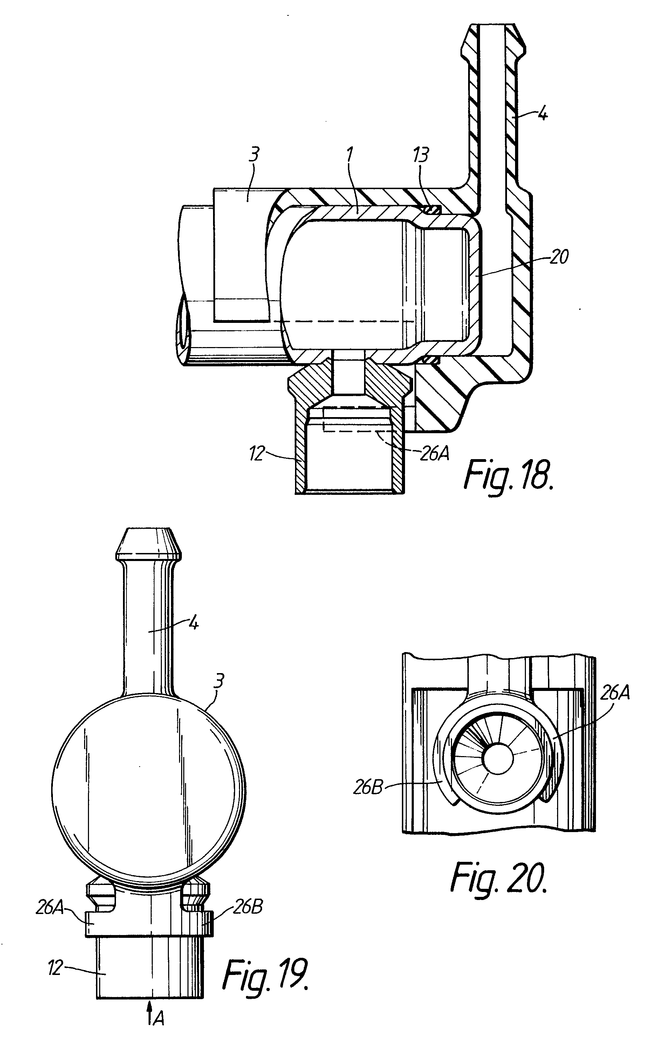

Shown in Figures 18 to 20 is a master cylinder which differs from the foregoing embodiments in that instead of a separate clip, the sleeve 3 is formed with an integral retaining part which again has a pair of resiliently flexible arms 26A, 26B adapted to snap around and grip the outlet 12. When the sleeve 3 is pushed onto the body 1, the arms automatically engage the outlet to secure the sleeve firmly in position. In this embodiment no angular adjustment of the spigot 4 is possible although the retaining part can be positioned at any location around the sleeve when it is made to obtain the desired orientation of the spigot 4.

In all of the foregoing embodiments the sleeve has been described as having a spigot 4, but it should be understood that instead a reservoir may be directly connected to or be integral with the sleeve, in which case the spigot is unnecessary.

## Claims

1. An hydraulic master cylinder comprising a body (1) defining a cylinder bore and an outlet port (12) connected to a lower region of the bore, and an insert (40) stationarily mounted in the bore, the said insert defining, with the bore, a passage for leading fluid from the upper region of the cylinder to the outlet port, characterized in that the insert (40) is positioned in the bore to form a division between a main pressur chamber (42) and an auxiliary chamber (44) of relatively small volume which communicates with the outlet port (12), and that the said passage is formed as a longitudinal duct (54;80) in the upper region of the bore interconnecting the said chambers (32,44).

2. A master cylinder according to claim 1, further comprising an axial reservoir (20) port and a valve (46) carried by a spindle (48) coupled to the piston (2) of the master cylinder for closing the reservoir port (20) when the piston is actuated, characterized in that the said insert (40), is mounted over the spindle (48) and serves to support it radially in the bore.

3. A master cylinder according to claim 1 or 2, characterised in that the insert (40) is formed with one or more further longitudinal ducts (56) connecting the said chamber (42,44).

4. A master cylinder according to claim 1, 2 or 3, characterized in that the said insert (40) is secured within the bore the local deformations (60) in the body (1) engaging in recesses (62) in the outer periphery of the insert.

5. A master cylinder according to claim 1,2 or 3, characterized in that the insert (40) is embraced and abutted by a sleeve (68) acting to space the insert from the adjacent end wall of the body (1), the sleeve being retained axially by local deformation (72) of the sleeve into the mouth of the outlet port (12).

6. A master cylinder according to claim 1, 2 or 3, characterized in that the insert (40) forms an abutment for the return spring of the piston (2) and is formed with axially extending legs (66) which abut the adjacent end wall of the cylinder body (1).

7. A master cylinder according to claim 1 or 2, characterized in that the insert (40) comprises a continuous collar (80) and the cylinder bore is formed with an axial recess (82) traversing the axial length of the collar to form the said longitudinal duct.

EP 0 337 788 A2

Fig. 1.

Fig. 2.

Fig. 3.

Fig. 4.

Fig. 5.

Fig. 6.

Fig. 7.

Fig. 8.

Fig. 9.

Fig. 10.

Fig. 11.

Fig. 12.

Fig. 13.

Fig. 14.

Fig. 15.

Fig. 16.

Fig. 17.

EP 0 337 788 A2

Fig. 18.

Fig. 19.

Fig. 20.